# EUROPÄISCHE PATENTSCHRIFT

(11) **EP 2 546 542 B1**
(45) Veröffentlichungstag und Bekanntmachung des Hinweises auf die Patenterteilung: **21.11.2018**
(21) Anmeldenummer: 12172355.5
(22) Anmeldetag: 18.06.2012
(51) Int. Cl.: F16F 9/46

(54) **Verstellbare Dämpfventileinrichtung mit einem Notbetriebventil**
Adjustable steam valve device with an emergency valve
Dispositif de robinet de vapeur réglable doté d'une soupape de fonctionnement d'urgence

(30) Priorität: 14.07.2011 DE 102011079144
(43) Veröffentlichungstag der Anmeldung: 16.01.2013
(73) Patentinhaber: ZF Friedrichshafen AG, 88046 Friedrichshafen (DE)
(72) Erfinder: Heyn, Steffen, 97464 Niederwerrn (DE); Förster, Andreas, 97422 Schweinfurt (DE)

(56) Entgegenhaltungen:
- EP-A1- 2 103 835
- DE-A1- 4 208 886
- DE-A1- 4 418 972
- DE-B3-102008 041 735

## Beschreibung

Die Erfindung betrifft eine verstellbare Dämpfventileinrichtung gemäß dem Oberbegriff von Patentanspruch 1.

Die DE 10 2008 041 735 B3 beschreibt eine verstellbare Dämpfventileinrichtung, die in zwei Richtungen durchströmt wird. Ein Hauptstufenventilkörper der Dämpfventileinrichtung wird von einer mechanischen Federkraft und einer entgegengesetzten Aktuatorkraft belastet. Die daraus resultierende Betätigungskraft wirkt gegen eine hydraulische Kraft, die ebenfalls aus zwei entgegengesetzten Kraftkomponenten besteht. Der Hauptstufenventilkörper verfügt über druckbeaufschlagte Flächen, die vom Dämpfmedium belastet werden. Dabei wird eine druckbeaufschlagte Fläche für eine Schließkraftkomponente für beide Durchströmungsrichtungen verwendet. Das Verhältnis der maximal erreichbaren Dämpfkraft zur minimalen Dämpfkraft, auch Spreizung genannt, wird durch diese vorteilhafte Ausgestaltung der Dämpfventileinrichtung vergrößert.

Insgesamt zeichnet sich die verstellbare Dämpfventileinrichtung durch ihren einfachen Aufbau aus. Insbesondere verfügt die Dämpfventileinrichtung über eine Notbetriebfunktion, indem bei einem Ausfall der Energieversorgung für den Aktuator stets eine große Dämpfkraft eingestellt ist, so dass das Fahrzeug sicher beherrschbar ist. Um eine weiche Dämpfkrafteinstellung zu erreichen, muss jedoch ein vergleichsweise großer Energieeinsatz eingestellt werden. Geht man davon aus, dass der Notbetrieb wahrscheinlich niemals auftritt, dann ist dieses Funktionsprinzip nachteilig.

Die DE 10 2009 016 464 B3 zeigt eine verstellbare Dämpfventileinrichtung mit einem Notbetriebventil, das bei Ausfall der Energieversorgung des Aktuators einen Abfluss aus einem Steuerraum schließt und ein Drosselwiderstand eines dem Notbetriebventil parallel geschalteter Abflussquerschnitt das Druckniveau im Steuerraum und damit die resultierende hydraulische Dämpfkraftkomponente am Hauptstufenventilkörper bestimmt.

Die Aufgabe der vorliegenden Erfindung ist es, ein Dämpfventil in der Bauform der DE 10 2008 041 735 B3 dahingehend zu verbessern, so dass einerseits bei geringem Energieeinsatz eine weiche Dämpfkrafteinstellung und bei Ausfall der Energieversorgung eine Notbetriebfunktion möglich ist.

Erfindungsgemäß wird die Aufgabe dadurch gelöst, dass die Dämpfventileinrichtung ein Notbetriebventil aufweist, über das für einen Notbetrieb ein Druckniveau in einem Steuerraum des Dämpfventils zumindest mittelbar einstellbar ist, wobei das Notbetriebventil nur bei einer Anströmungrichtung der Dämpfventileinrichtung wirksam ist.

Mit dem Notbetriebventil kann eine von der maximal weichen oder maximal harten Dämpfkraftkennlinie abweichende Dämpfkrafteinstellung erreicht werden. Im Normalbetrieb kann die Dämpfventileinrichtung aufgrund der Auslegung der Federkraft und der Wirkrichtung der Ventilfeder mit einem vergleichsweise geringen Energieeinsatz betrieben werden. Die Beschränkung der Wirkung des Notbetriebventils auf eine Anströmrichtung der Dämpfventileinrichtung vereinfacht ganz wesentlich den konstruktiven Aufwand.

In weiterer vorteilhafter Ausgestaltung ist die zusätzliche Fläche A_{SchließD2} des Ventilkörpers über mindestens zwei Strömungswege mit Dämpfmedium beaufschlagbar, wobei ein Strömungsweg über ein Notbetriebventil beeinflussbar ist. Die Verwendung von mehreren Strömungswegen zur zusätzlichen Fläche steigert die Dynamik der Dämpfventileinrichtung.

Gemäß einem vorteilhaften Unteranspruch nimmt ein Rückraum die Rückseite des Ventilkörpers auf und weist eine Strömungsanbindung als Zulauf und Ablauf mit einem Arbeitsraum des Schwingungsdämpfers auf. Die Doppelfunktion der Strömungsverbindung vereinfacht ebenfalls wesentlich den konstruktiven Aufbau.

Es kann vorgesehen sein, dass an den Rückraum ein Rückschlagventil angeschlossen ist, das einen Dämpfmediumstrom aus dem Rückraum in Richtung der zusätzlichen Fläche A_{SchließD2} freigibt. Durch diese konstruktive Maßnahme kann die Abhubbewegung des Ventilkörpers verzögerungsfrei erfolgen, da im Rückraum kein Dämpfmediumvolumen ohne Abflussmöglichkeit gekammert ist.

Um den Herstellungsaufwand zu minimieren, sind im Ventilkörper für eine Anströmrichtung der Dämpfventileinrichtung zwei Zuströmkanalsysteme zur zusätzlichen Fläche A_{SchließD2} ausgeführt.

In weiterer vorteilhafter Ausgestaltung ist der Ventilkörper zweischalig aufgebaut und in einer Trennungsebene ist ein Dämpfmediumströmungsweg ausgeführt. Die zweischalige Bauweise vereinfacht die Herstellbarkeit des Ventilkörpers.

Eine Maßnahme zur Maximierung der Ventildynamik besteht darin, dass der Dämpfmediumströmungsweg zur zusätzlichen Fläche A_{SchließD2} in Strömungsrichtung bezogen auf die zusätzliche Fläche A_{SchließD2} eine Abflussdrossel aufweist.

Die Strömungswege innerhalb der Dämpfventileinrichtung lassen sich zusätzlich dadurch einfach ausführen, indem eine druckbeaufschlagte Fläche A_{ÖZ} am Ventilkörper und eine Öffnung zum Steuerraum über eine gemeinsame Anschlussöffnung ausgeführt sind.

Anhand der folgenden Figurenbeschreibung soll die Erfindung näher erläutert werden.

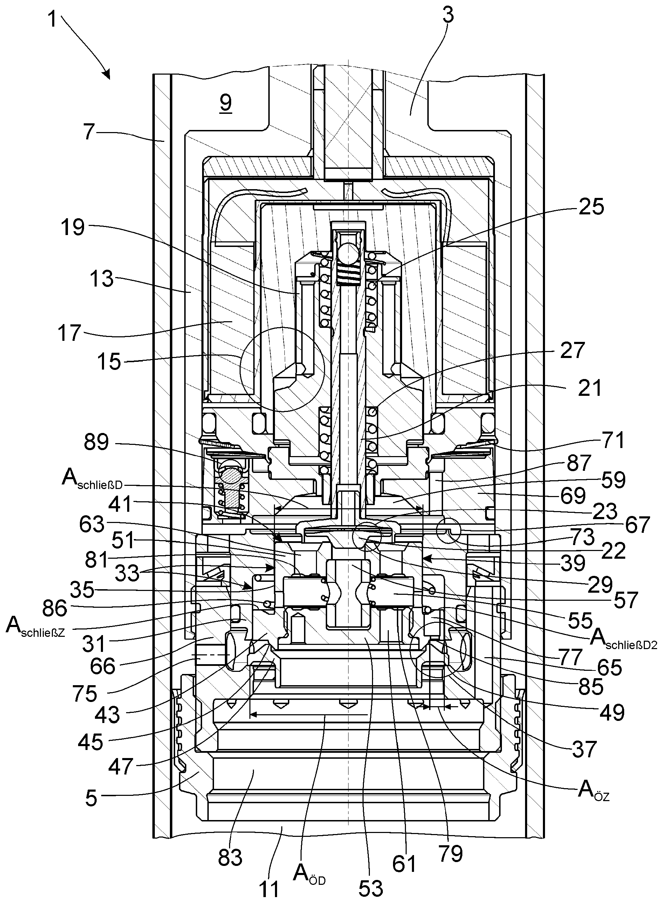

Die einzige Figur zeigt eine Dämpfventileinrichtung 1, die z. B. an einer Kolbenstange 3 eines nur ausschnittweise dargestellten Schwingungsdämpfers befestigt ist. Die Dämpfventileinrichtung 1 umfasst einen Kolben 5, der einen Zylinder 7 in einen kolbenstangenseitigen und einen kolbenstangenfernen Arbeitsraum 9; 11 unterteilt, die beide mit Dämpfmedium gefüllt sind. In diesem Ausführungsbeispiel ist die Dämpfventileinrichtung an der Kolbenstange 3 befestigt, jedoch ist die Erfindung nicht auf eine derartige Anordnung eingeschränkt.

In einem äußeren Gehäuse 13 ist ein Aktuator 15 beliebiger Bauform angeordnet, wobei in diesem Beispiel als Aktuator eine Magnetspule 17 dient, die auf einen axial beweglichen Anker 19 eine Kraft ausübt, die auf einen zweigeteilten Vorventilkörper 21 eines Vorventils 23 übertragen wird. Mindestens eine Ventilfeder, in dieser Variante kommen zwei entgegengesetzt wirksame Ventilfedern 25; 27 zur Anwendung, spannen den Vorventilkörper 21 in Abhubrichtung bezogen auf eine Vorventilfläche 29 des Vorventils 23 vor. Der Aktuator 15 wirkt in Schließrichtung des Vorventils 23. Die Kraft der mindestens einen Ventilfeder 25; 27 und die Kraft des Aktuators 15 bilden eine resultierende Kraft, die auf den Vorventilkörper 21 in Abhubrichtung einwirkt.

In einem inneren Gehäuse 31 der Dämpfventileinrichtung 1 ist eine Stufenöffnung 33 ausgeführt, in der ein Ventilkörper 35 eines Hauptstufenventils 37 eine axiale Bewegung ausführen kann. Der Ventilkörper 35 verfügt über eine Führungshülse 39, deren Rückseite 41 eine vom Dämpfmedium druckbeaufschlagte Fläche A_{SchließD} bildet. Des Weiteren weist der Ventilkörper 35 einen radialen Absatz 43 auf, der in Richtung der Rückseite 41 eine zusätzliche druckbeaufschlagte Fläche A_{SchließD2} darstellt.

In einer Ruhelage der Kolbenstange 3, das heißt ohne Öffnungskraft, liegt der Ventilkörper 35 auf einer Ventilsitzfläche 45 eines axial beweglichen Ventilrings 47 auf, der an seiner in Richtung des kolbenstangenfernen Arbeitsraum 11 weisenden Seite auf einer gehäuseseitigen Ventilsitzfläche 49 aufliegt.

Der Ventilkörper 35 ist zweischalig aufgebaut. Ein äußerer Topf 51 bildet die Führungshülse 39 und den radialen Absatz 43. Eine innere Scheibe 53 begrenzt mit dem Topf 51 in einer Trennungsebene einen radialen Dämpfmediumströmungsweg 55 zwischen der zusätzlichen druckbeaufschlagten Fläche A_{SchließD2} und einem Steuerraum 57, dessen Abflussquerschnitt in Richtung eines Rückraums 59 vom Ventilkörper 21 bestimmt wird.

Die zusätzliche Fläche A_{SchließD2} des Ventilkörpers 35 ist über mindestens zwei Strömungswege mit Dämpfmedium beaufschlagbar. Ein erster Zuströmkanal 61 ist direkt im Ventilkörper 35 als axiale Durchgangsöffnung ausgeführt. Auf einem Teilabschnitt verläuft ein zweiter Zuströmkanal 63 innerhalb des Ventilkörpers 35 zwischen dem Rückraum 59 des Hauptstufenventils 37 und dem Dämpfmediumströmungsweg 55. Eine Strömungsanbindung 65 des Rückraums 59 zum kolbenstangenfernen Arbeitsraum 11 innerhalb einer Verbindungshülse 66 zwischen dem äußeren Gehäuse 13 und dem Kolben 5 wird von einem Notbetriebventil 67 gesteuert. Das Notbetriebventil 67 wird von einem Ventilring 69 gebildet, der gegen die Kraft mindestens einer Schließfeder 71 von dem Aktuator 15 von einer Notbetriebventilsitzfläche 73 abgehoben wird. Schon ein geringer Energieeinsatz für den Aktuator 15 genügt, um die Abhubbewegung des Ventilrings 69 zu erreichen. In diesem Beispiel wirkt die Magnetkraft der Magnetspule 17 auf den Ventilring 69. Durch eine geschickte Bemessung der Federkräfte und der Magnetkräfte kann eine strikte Trennung zwischen einem Notbetriebzustand und einem Normalbetriebzustand erreicht werden. Damit ist der Strömungsweg zwischen dem Rückraum 59 und dem kolbenstangenfernen Arbeitsraum 11 über das Notbetriebventil 67 beeinflussbar.

In der Verbindungshülse 66 der Dämpfventileinrichtung 1 ist mindestens eine Anschlussöffnung 75 ausgeführt, die vom kolbenstangenseitigen Arbeitsraum 9 zur druckbeaufschlagten Fläche A_{ÖZ} an der Unterseite des radialen Absatzes und zum Steuerraum 57 führt. Dazu verfügt der Hauptstufenventilkörper über mindestens eine axiale Öffnung 77 im Bereich des radialen Absatzes 43.

Damit das Dämpfmedium bei einer Anstömung über die Anschlussöffnung 75 nicht durch die Zuströmkanäle 61; 63 im Ventilkörper 35 in Richtung des kolbenstangenfernen Arbeitsraums 11 entweicht, sind die Zuströmkanäle 61; 63 durch Rückschlagventile 79; 81 gesichert. Dabei ist das Rückschlagventil 81 über den Zuströmkanal 63 an den Rückraum 59 angeschlossen ist, der Teil des zweiten Zuströmkanals ist. Bei einem Dämpfmediumstrom aus dem Rückraum 59 in Richtung der zusätzlichen Fläche A_{SchließD2} gibt das Rückschlagventil 81 den Strömungsweg frei.

Es sind vier grundlegende Betriebszustände zu betrachten. Ein erster Betriebszustand der Dämpfventileinrichtung 1 ist gekennzeichnet durch eine Anströmung ausgehend vom kolbenstangenfernen Arbeitsraum 11 über eine Durchgangsöffnung 83 auf den Ventilring 47 und den Ventilkörper 35. Das Notbetriebventil 67 ist eingeschaltet, d. h. wie in der dargestellten Position von seiner Notbetriebventilsitzfläche 73 abgehoben und der Aktuator 15 wirkt der Kraft der Ventilfeder 25; 27 entgegen. Das Dämpfmedium gelangt über den ersten Zuströmkanal 61 im Ventilkörper 35 und das geöffnete Rückschlagventil 79 und weiter durch den Dämpfmediumströmungsweg 55 zur zusätzlichen Ventilschließfläche A_{SchließD2}. Der Druck auf diese Ventilschließfläche A_{SchließD2} übt eine erste Schließkraftkomponente aus. Des Weiteren gelangt Dämpfmedium durch die Strömungsanbindung 65 in der Verbindungshülse 66 und durch das geöffnete Notbetriebventil 67 in den Rückraum 59 und weiter durch das geöffnete Rückschlagventil 81 zur zusätzlichen druckbeaufschlagten Fläche A_{Schließ2D}. Wie bereits beschrieben stellt die Rückseite 41 des Ventilkörpers 35 die druckbeaufschlagte Fläche A_{SchließD} dar. Die auf den Ventilkörper 35 wirksame Schließkraft setzt sich aus der resultierenden Schließkraft, die über den Vorventilkörper direkt auf die Rückseite 41 des Ventilkörpers 35 einwirkt und den Druckkräfte auf den Flächen A_{SchließD} und A_{SchließD2} zusammen. Aufgrund der vergleichsweise geringen Drosselverluste sind die Druckniveaus an den Flächen A_{SchließD} und A_{SchließD2} ähnlich wie im kolbenstangenfernen Arbeitsraum, u. a. deshalb, weil der Dämpfmediumströmungsweg zur zusätzlichen Fläche A_{SchließD2} in Strömungsrichtung bezogen auf die zusätzliche Fläche A_{SchließD2} eine Abflussdrossel 85 aufweist. Eine Fläche A_{ÖD} am Ventilring 47 ist geringfügig größer, als die Summe der Flächen A_{SchließD} und A_{SchließD2}, so dass eine Blockierung der Abhubbewegung des Ventilkörpers 35 aufgrund der Druckverhältnisse ausgeschlossen ist. Der Druck im Steuerraum 57 des Hauptstufenventilkörpers spielt bei dieser Anströmungsrichtung der Dämpfventileinrichtung keine Rolle, da das Vorventil durch die Strömungsanbindung 65 zum Rückraum 59 überbrückt ist.

Ein zweiter Betriebszustand beschreibt den Notbetriebzustand der Dämpfventileinrichtung 1 und einer Anströmung der Dämpfventileinrichtung 1 ausgehend von der Durchgangsöffnung 83. Das Notbetriebventil 67 ist aufgrund fehlender Energiezufuhr über den Aktuator 15 geschlossen. Der Vorventilkörper 22 ist axial geringfügig innerhalb des Vorventilkörpers 21 verschieblich geführt. Im stromlosen Zustand der Magnetspule 17 halten die Ventilfedern 25; 27 den Vorventilkörper 21 statisch betrachtet, d. h. ohne hydraulische Anströmung, in einem maximalen Abstand zur Vorventilsitzfläche 29. Der Vorventilkörper 22 kann deshalb schon bei der geringsten Druckbeaufschlagung ausgehend vom Steuerraum 57 eine maximale Abhubposition einnehmen. Das Ventil 29 ist je nach Abstimmung der Ventilfeder 25; 27 geschlossen oder geringfügig geöffnet. Das Dämpfmedium gelang wie im Normalbetriebzustand über den Zuströmkanal 61 im Ventilkörper 35 und das geöffnete Rückschlagventil 79 zu der zusätzlichen druckbeaufschlagten Fläche A_{SchließD2}. Damit der Ventilkörper 35 zusammen mit dem Ventilring 47 von der gehäuseseitigen Ventilsitzfläche 49 unabhängig von der Schaltstellung des Notbetriebventils 67 abheben kann, öffnet das Rückschlagventil 81 im Ventilkörper 35, so dass aus dem Rückraum 59 verdrängtes Dämpfmedium über den Zuströmkanal 63 im Ventilkörper 35 in Richtung der zusätzlichen druckbeaufschlagten Fläche A_{SchließD2} abfließen kann.

Der dritte Betriebszustand bezieht sich auf eine Anströmung der Dämpfventileinrichtung 1 ausgehend vom kolbenstangenseitigen Arbeitsraum 9 und geöffnetem Notbetriebventil 67. Das Dämpfmedium gelangt durch die Anschlussöffnung 75 in der Verbindungshülse 66 zur druckbeaufschlagten Fläche A_{ÖZ} am radialen Absatz 43 und weiter zur nun funktional eine Schließfläche A_{SchließZ} bildende druckbeaufschlagten Fläche. Die druckbeaufschlagte Fläche am radialen Absatz des Hauptstufenventilkörpers ist für beide Anströmrichtungen der Dämpfventileinrichtung wirksam. In Abhängigkeit der Energieversorgung des Aktuators 15 stellt sich eine Vorventilposition ein, über die wiederum ein Steuerdruck im Steuerraum 57 und damit auch an der druckbeaufschlagten Fläche A_{SchließZ} ansteuerbar ist. Der auf eine ringförmige Fläche A_{ÖZ} wirksame Druck wirkt dem in Schließrichtung wirksamen Druck auf die Fläche A_{SchließZ} entgegen. Wegen der Ablaufdrossel 85, die nun als Zulaufdrossel fungiert, liegt bei geöffneten Vorventil 23 ein Druckgefälle zwischen den Drücken an den Flächen A_{ÖZ} und A_{SchließZ} vor, so dass die hydraulische Öffnungskraft am Ventilkörper 35 stets etwas größer ist als die hydraulische Schließkraft. Der Druck in der Anschlussöffnung 75 wirkt auch auf den Ventilring 47, der damit auf die gehäuseseitige Ventilsitzfläche 49 gedrückt wird. Deshalb hebt der Ventilkörper 35 von der Ventilsitzfläche 45 des Ventilrings 47 ab.

Das aus dem Steuerraum 57 durch das Vorventil 23 abfließende Dämpfmedium gelangt in den Rückraum 59 und durch das geöffnete Notbetriebventil 67 und die Strömungsverbindung 65 in der Verbindungshülse 66 in den kolbenstangenfernen Arbeitsraum 11. Folglich weist der Rückraum 59 einen Zulauf und Ablauf mit dem Arbeitsraum 11 des Schwingungsdämpfers auf.

Beim vierten Betriebzustand erfolgt die Zuströmung wiederum über die Anschlussöffnung 75 in der Verbindungshülse 66, jedoch ist das Notbetriebventil 67 geschlossen. Der Strömungsweg zum Vorventil 23 entspricht dem Beschriebenen zum dritten Betriebszustand. Abweichend ist das Vorventil 23 aufgrund der fehlenden Stromversorgung des Aktuators 17 maximal geöffnet. Eine Schließfeder 86 sorgt für ein Aufsitzen des Hauptstufenventilkörpers 35 zusammen mit dem Ventilring 47 auf der gehäuseseitigen Ventilsitzfläche 49. Damit wird ein hydraulischer Kurzschluss zwischen den Arbeitsräumen über die Anschlussöffnung 75 verhindert. Das Dämpfmedium gelangt in den Rückraum 59, dessen Abfluss über das geschlossene Notbetriebventil 67 blockiert ist. In dem Ventilring 69 des Notbetriebsventils 67 ist ein Strömungspfad 87 zu einem Druckbegrenzungsventil 89 ausgeführt, über das ein definiertes Druckniveau im Rückraum 59 bestimmt werden kann. Das Druckniveau im Rückraum 59 und damit auf die Rückseite 41 des Ventilkörpers 35 und auf die druckbeaufschlagte Fläche am radialen Absatz A_{SchließZ} bestimmt die Schließkraft im Notbetrieb der Dämpfventileinrichtung 1. Der Vergleich des zweiten mit dem vierten Betriebszustand verdeutlicht, dass das Notbetriebventil nur bei einer Anströmungrichtung der Dämpfventileinrichtung 1 über die Anschlussöffnung 75 wirksam ist. Versuche haben gezeigt, dass diese Auslegung der Dämpfventileinrichtung 1 für ein sicheres Betriebsverhalten eines Schwingungsdämpfers geeignet ist.

### Bezugszeichen

- 1: Dämpfventileinrichtung
- 3: Kolbenstange
- 5: Kolben
- 7: Zylinder
- 9: kolbenstangenseitiger Arbeitsraum
- 11: kolbenstangenferner Arbeitsraum
- 13: äußeres Gehäuse
- 15: Aktuator
- 17: Magnetspule
- 19: Anker
- 21: Vorventilkörper
- 22: Vorventilkörper
- 23: Vorventil
- 25, 27: Ventilfeder
- 29: Vorventilfläche
- 31: inneres Gehäuse
- 33: Stufenöffnung
- 35: Ventilkörper
- 37: Hauptstufenventil
- 39: Führungshülse
- 41: Rückseite
- 43: radialer Absatz
- 45: Ventilsitzfläche
- 47: Ventilring
- 49: gehäuseseitige Ventilsitzfläche
- 51: äußerer Topf
- 53: innere Scheibe
- 55: Dämpfmediumströmung
- 57: Steuerraum
- 59: Rückraum
- 61: erster Zuströmkanal
- 63: zweiter Zuströmkanal
- 65: Strömungsanbindung
- 66: Verbindungshülse
- 67: Notbetriebsventil
- 69: Ventilring
- 71: Schließfeder
- 73: Notbetriebsventilsitzfläche
- 75: Anschlussöffnung
- 77: axiale Öffnung
- 79,81: Rückschlagventil
- 83: Durchgangsöffnung
- 85: Abflussdrossel
- 86: Schließfeder
- 87: Strömungspfad
- 89: Druckbegrenzungsventile

## Patentansprüche

1. Verstellbare Dämpfventileinrichtung (1) für einen Schwingungsdämpfer, umfassend ein Gehäuse (31) mit einer Stufenöffnung (33), in dem ein Ventilkörper (35) über eine Führungshülse (39) und einem radial nach außen gerichteten Absatz (43) axial beweglich geführt ist, wobei der Ventilkörper (35) in Richtung einer Ventilsitzfläche (49) innerhalb einer Kontaktfläche zwischen dem Ventilkörper (35; 45) und der Ventilsitzfläche (49) eine in Abhubrichtung des Ventilkörpers (35; 47) wirksame druckbeaufschlagte Fläche _{AÖD} aufweist, die von einer Durchgangsöffnung (83) innerhalb eines von einer Ventilsitzfläche (49) begrenzten Querschnitts mit Dämpfmedium angeströmt wird, und von einer Rückseite (41) des Ventilkörpers (35) eine mit dem Durchmesser der Führungshülse (39) wirksame in Schließrichtung druckbeaufschlagte Fläche A_{SchließD} gebildet wird, wobei auf den Ventilkörper (35; 47) eine resultierende Kraft, umfassend eine Kraft mindestens einer Ventilfeder (25; 27) und eine Stellkraft eines Aktuators (15) wirkt, wobei bei einer Anströmung des Ventilkörpers (35; 45) über die Durchgangsöffnung (83) in Schließrichtung des Ventilkörpers (35; 45) eine zusätzliche Fläche A_{SchließD2} des Ventilkörpers (35; 45) mit Dämpfmedium druckbeaufschlagt wird, **dadurch gekennzeichnet, dass** die Dämpfventileinrichtung (1) ein Notbetriebventil (67) aufweist, über das für einen Notbetrieb ein Druckniveau in einem Steuerraum der Dämpfventileinrichtung (1) zumindest mittelbar einstellbar ist, wobei das Notbetriebventil nur bei einer Anströmungsrichtung der Dämpfventileinrichtung (1) wirksam ist.

2. Dämpfventileinrichtung nach Anspruch 1, **dadurch gekennzeichnet, dass** die zusätzliche Fläche A_{SchließD2} des Ventilkörpers (35) über mindestens zwei Strömungswege (61; 65; 59; 63) mit Dämpfmedium beaufschlagbar ist, wobei ein Strömungsweg (63; 59; 63) über das Notbetriebventil (67) beeinflussbar ist.

3. Dämpfventileinrichtung nach Anspruch 1, **dadurch gekennzeichnet, dass** ein Rückraum (59) die Rückseite (41) des Ventilkörpers (35) aufnimmt und der Rückraum (59) eine Strömungsanbindung (65) als Zulauf und Ablauf mit einem Arbeitsraum (11) des Schwingungsdämpfers aufweist.

4. Dämpfventileinrichtung nach Anspruch 1, **dadurch gekennzeichnet, dass** an den Rückraum (59) ein Rückschlagventil (81) angeschlossen ist, das einen Dämpfmediumstrom aus dem Rückraum (59) in Richtung der zusätzlichen Fläche A_{SchließD2} freigibt.

5. Dämpfventileinrichtung nach Anspruch 1, **dadurch gekennzeichnet, dass** im Ventilkörper (35) für eine Anströmrichtung der Dämpfventileinrichtung (1) zwei Zuströmkanalsysteme (61; 63) zur zusätzlichen Fläche A_{SchließD2} ausgeführt sind.

6. Dämpfventileinrichtung nach Anspruch 1, **dadurch gekennzeichnet, dass** der Ventilkörper (35) zweischalig aufgebaut ist und in einer Trennungsebene ein Dämpfmediumströmungsweg (55) ausgeführt ist.

7. Dämpfventileinrichtung nach Anspruch 6, **dadurch gekennzeichnet, dass** der Dämpfmediumströmungsweg (55) zur zusätzlichen Fläche A_{SchließD2} in Strömungsrichtung bezogen auf die zusätzliche Fläche A_{SchließD2} eine Abflussdrossel (85) aufweist.

8. Dämpfventileinrichtung nach Anspruch 1, **dadurch gekennzeichnet, dass** eine druckbeaufschlagte Fläche A_{ÖZ} am Ventilkörper (35) und eine Öffnung (77) zum Steuerraum (55) über eine gemeinsame Anschlussöffnung (75) ausgeführt ist.

## Claims

1. Adjustable damper valve device (1) for a vibration damper, comprising a housing (31) with a stepped opening (33), in which a valve body (35) is guided in an axially movable manner via a guide sleeve (39) and a radially outwardly directed shoulder (43), the valve body (35) having, in the direction of a valve seat face (49) within a contact face between the valve body (35; 45) and the valve seat face (49), a pressurized face A_{ÖD} which is active in the lift-off direction of the valve body (35; 47) and is flowed onto by way of damping medium from a through opening (83) within a cross section which is delimited by a valve seat face (49), and a face A_{SchließD} which is pressurized in the closing direction and is active with the diameter of the guide sleeve (39) being formed by a rear side (41) of the valve body (35), a resulting force comprising a force of at least one valve spring (25; 27) and an actuating force of an actuator (15) acting on the valve body (35; 47), an additional face A_{SchließD2} of the valve body (35; 45) being pressurized by way of damping medium in the case of an incident flow of the valve body (35; 45) via the through opening (83) in the closing direction of the valve body (35; 45), **characterized in that** the damper valve device (1) has an emergency operation valve (67), via which a pressure level in a control space of the damper valve device (1) can be set at least indirectly for emergency operation, the emergency operation valve being active only in an incident flow direction of the damper valve device (1).

2. Damper valve device according to Claim 1, **characterized in that** the additional face A_{SchließD2} of the valve body (35) can be loaded with damping medium via at least two flow paths (61; 65; 59; 63), it being possible for a flow path (63; 59; 63) to be influenced via the emergency operation valve (67).

3. Damper valve device according to Claim 1, **characterized in that** a rear space (59) receives the rear side (41) of the valve body (35), and the rear space (59) has a flow attachment (65) as an inflow and an outflow to a working space (11) of the vibration damper.

4. Damper valve device according to Claim 1, **characterized in that** a check valve (81) is connected to the rear space (59), which check valve (81) releases a damper medium flow out of the rear space (59) in the direction of the additional face A_{SchließD2}.

5. Damper valve device according to Claim 1, **characterized in that** two inflow channel systems (61; 63) to the additional face A_{SchließD2} are configured in the valve body (35) for an incident flow direction of the damper valve device (1).

6. Damper valve device according to Claim 1, **characterized in that** the valve body (35) is of double-shell construction, and a damper medium flow path (55) is configured in a separation plane.

7. Damper valve device according to Claim 6, **characterized in that** the damper medium flow path (55) to the additional face A_{SchließD2} has an outflow throttle (85) in relation to the flow direction to the additional face A_{SchließD2}.

8. Damper valve device according to Claim 1, **characterized in that** a pressurized face A_{öZ} on the valve body (35) and an opening (77) to the control space (55) via a common connector opening (75) are configured.

## Revendications

1. Dispositif de robinet de vapeur réglable (1) pour un amortisseur de vibrations, comprenant un boîtier (31) avec une ouverture étagée (33), dans lequel un corps de soupape (35) est guidé en mouvement axial par une douille de guidage (39) et un épaulement (43) orienté radialement vers l'extérieur, dans lequel le corps de soupape (35) présente, en direction d'une face de siège de soupape (49) à l'intérieur d'une face de contact entre le corps de soupape (35; 45) et la face de siège de soupape (49), une face A_{ÖD} soumise à la pression et active dans la direction de levée du corps de soupape (35; 47), qui reçoit du fluide vapeur d'une ouverture de passage (83) à l'intérieur d'une section transversale limitée par une face de siège de soupape (49), et une face A_{SchließD} soumise à la pression dans la direction de fermeture et active avec le diamètre de la douille de guidage (39) est formée par un côté arrière (41) du corps de soupape (35), dans lequel une force résultante, comprenant une force d'au moins un ressort de soupape (25; 27) et une force de réglage d'un actionneur (15), agit sur le corps de soupape (35; 47), dans lequel lors d'un afflux sur le corps de soupape (35; 45) par l'ouverture de passage (83) dans la direction de fermeture du corps de soupape (35; 45), une face supplémentaire A_{SchließD2} du corps de soupape (35; 45) est soumise à la pression avec le fluide vapeur, **caractérisé en ce que** le dispositif de robinet de vapeur (1) présente une soupape de fonctionnement d'urgence (67), par laquelle un niveau de pression peut être réglé au moins indirectement dans une chambre de commande du dispositif de robinet de vapeur (1) pour un fonctionnement d'urgence, dans lequel la soupape de fonctionnement d'urgence n'est active que dans une direction d'alimentation du dispositif de robinet de vapeur (1).

2. Dispositif de robinet de vapeur selon la revendication 1, **caractérisé en ce que** la face supplémentaire A_{SchließD2} du corps de soupape (35) peut être soumise au fluide vapeur par au moins deux voies d'écoulement (61; 65; 59; 63), dans lequel une voie d'écoulement (63; 59; 63) peut être influencée par la soupape de fonctionnement d'urgence (67).

3. Dispositif de robinet de vapeur selon la revendication 1, **caractérisé en ce qu'**une chambre arrière (59) contient le côté arrière (41) du corps de soupape (35) et la chambre arrière (59) présente une liaison d'écoulement (65) comme arrivée et départ avec une chambre de travail (11) de l'amortisseur de vibrations.

4. Dispositif de robinet de vapeur selon la revendication 1, **caractérisé en ce qu'**un clapet anti-retour (81), qui libère un courant de fluide vapeur sortant de la chambre arrière (59) en direction de la face supplémentaire A_{SchließD2}, est raccordé à la chambre arrière (59).

5. Dispositif de robinet de vapeur selon la revendication 1, **caractérisé en ce que** deux systèmes de canal d'arrivée (61; 63) vers la face supplémentaire A_{SchließD2} sont réalisés dans le corps de soupape (35) pour une direction d'alimentation du dispositif de robinet de vapeur (1).

6. Dispositif de robinet de vapeur selon la revendication 1, **caractérisé en ce que** le corps de soupape (35) est constitué de deux coquilles et une voie d'écoulement de fluide vapeur (55) est réalisée dans un plan de séparation.

7. Dispositif de robinet de vapeur selon la revendication 6, **caractérisé en ce que** la voie d'écoulement de fluide vapeur (55) vers la face supplémentaire A_{SchließD2} présente dans la direction d'écoulement un étranglement d'évacuation (85) par rapport à la face supplémentaire A_{SchließD2}.

8. Dispositif de robinet de vapeur selon la revendication 1, **caractérisé en ce qu'**une face soumise à la pression A_{ÖZ} est réalisée sur le corps de soupape (35) et une ouverture (77) vers la chambre de commande (55) est réalisée par une ouverture de raccordement commune (75).
